# FASCICULE DE BREVET EUROPEEN

(11) **EP 0 556 524 B1**
(45) Date de publication et mention de la délivrance du brevet: **26.07.1995**
(21) Numéro de dépôt: 92403511.6
(22) Date de dépôt: 21.12.1992
(51) Int. Cl.: F01L 3/06, F01L 3/10, F01L 1/18

(54) **Dispositif de commande d'une soupape comportant des moyens d'arrêt en rotation de la soupape**
Hubventilsteuerungsvorrichtung mit Mitteln zum Sperren der Ventildrehbewegung
Valve drive with means for preventing rotational motion of the valve

(30) Priorité: 19.02.1992 FR 9201890
(43) Date de publication de la demande: 25.08.1993
(73) Titulaire: AUTOMOBILES PEUGEOT, 75116 Paris (FR); AUTOMOBILES CITROEN, 92200 Neuilly-sur-Seine (FR)
(72) Inventeur: Chemin, Philippe, F-78400 Chatou (FR)
(74) Mandataire: Polus, Camille

(56) Documents cités:
- FR-A- 2 633 663
- GB-A- 875 350
- US-A- 2 926 645
- PATENT ABSTRACTS OF JAPAN vol. 11, no. 067 (M-566) 28 Février 1987 & JP-A-61 223 207 (NIPPON SOKEN INC) 3 Octobre 1986

## Description

La présente invention concerne un dispositif de commande d'une soupape, notamment d'un moteur à combustion interne d'un véhicule automobile.

L'invention concerne plus particulièrement un dispositif de commande comportant des moyens pour empêcher la rotation de la soupape autour de son axe.

Le dispositif de commande de ce type est notamment nécessaire lorsque la tête de la soupape comporte, sur sa partie évasée qui s'étend à l'intérieur du conduit d'admission ou d'échappement, un déflecteur de gaz dont l'orientation doit être maintenue de manière constante et précise par rapport au conduit et à la chambre de combustion.

On connaît différentes solutions pour empêcher la soupape de tourner autour de son axe.

Certaines de ces solutions sont décrites et représentées dans le document FR-A-2.633.663.

Ce document décrit notamment un dispositif de commande d'une soupape du type comportant un élément oscillant dont une portion d'extrémité agit sur l'extrémité libre de la queue de la soupape avec interposition d'une pièce intermédiaire qui est liée en rotation à la queue de la soupape et qui comporte au moins une surface d'orientation qui coopère avec une surface de guidage correspondante de l'élément oscillant pour empêcher la rotation de la soupape autour de son axe.

La solution proposée dans ce document consiste à réaliser une pièce intermédiaire de forme complexe dont la fixation sur l'extrémité de la queue de la soupape est assurée de manière indirecte au moyen de vis.

Outre sa très grande complexité de réalisation et de montage, l'agencement décrit dans ce document a pour inconvénient de présenter des risques importants de détérioration du moteur en cas de dévissage accidentel des vis de fixation de la pièce intermédiaire.

Il a également été proposé dans les documents US-A-2.926.645 et GB-A-875.350 des dispositifs interposés entre l'extrémité du linguet de culbuteur et l'extrémité de la queue de la soupape pour éviter un échappement latéral du linguet. L'élément intermédiaire interposé à cet effet ne procure toutefois aucune orientation angulaire constante et définie du linguet par rapport à l'axe de la queue de la soupape, cette dernière demeurant libre de tourner autour de son axe.

Afin de remédier à ces inconvénients, l'invention propose un dispositif de commande du type qui vient d'être mentionné, caractérisé en ce que la pièce intermédiaire comporte deux évidements opposés axialement dont le premier reçoit la portion d'extrémité de l'élément oscillant et dont le second reçoit l'extrémité libre de la queue de la soupape, et en ce que la queue de la soupape est équipée, au voisinage de son extrémité libre, d'une coupelle d'appui pour un ressort hélicoïdal de la soupape entourant la queue de la soupape, la pièce intermédiaire comportant un profil extérieur de révolution autour de l'axe de la soupape de manière à être montée à rotation dans un logement complémentaire de la coupelle d'appui.

Selon d'autres caractéristiques de l'invention :
- la surface d'orientation de la pièce intermédiaire est constituée par au moins un méplat du premier évidement qui s'étend parallèlement à l'axe de la soupape et qui coopère avec une surface plane de guidage de la portion d'extrémité de l'élément oscillant qui est perpendiculaire à l'axe d'oscillation de cet élément ;
- la section par un plan parallèle à l'axe d'oscillation de la portion d'extrémité de l'élément oscillant et la section du premier évidement présentent des contours complémentaires ;
- le premier évidement est une rainure qui s'étend selon une direction perpendiculaire à l'axe d'oscillation de l'élément oscillant et la portion d'extrémité de ce dernier comporte deux faces latérales qui sont reçues entre les faces latérales de la rainure ;
- le dispositif comporte des moyens de détrompage afin de n'autoriser le montage de la portion d'extrémité de l'élément oscillant dans la rainure que dans une seule des deux positions diamétralement opposées ;
- à cet effet, les deux faces de la rainure ne sont pas parallèles entre elles, l'une d'entre elles étant inclinée par rapport à l'axe de la soupape pour former une rainure évasée à la face supérieure ouverte ;
- l'extrémité libre de la queue de la soupape comporte un méplat parallèle à l'axe de la soupape et le second évidement présente un contour complémentaire de celui de l'extrémité de la queue de la soupape ;
- l'extrémité libre de la queue de la soupape est excentrée par rapport à l'axe de la queue de la soupape ;
- l'extrémité libre de la queue de la soupape est emmanchée dans le second évidement ; et
D'autres caractéristiques et avantages de l'invention apparaîtront à la lecture de la description détaillée qui va suivre pour la compréhension de laquelle on se reportera aux dessins annexés dans lesquels :
- la figure 1 est une vue en coupe axiale partielle d'une portion d'une culasse de véhicule automobile équipée d'un dispositif de commande réalisé conformément aux enseignements de l'invention ;
- la figure 2 est une vue en section selon la ligne 2-2 de la figure 1 illustrant la partie supérieure de la queue de la soupape ;
- la figure 3 est une vue similaire à celle de la figure 2 dans laquelle la portion de l'extrémité de l'élément oscillant est en place dans la pièce intermédiaire ;
- la figure 4 est une vue similaire à celle de la figure 3 illustrant l'impossibilité de montage diamétralement opposé de la pièce intermédiaire ;
- la figure 5 est une vue de dessus de la pièce intermédiaire illustrée à la figure 2 ; et
- la figure 6 est une vue similaire à celle de la figure 3 illustrant une variante de réalisation de l'invention.

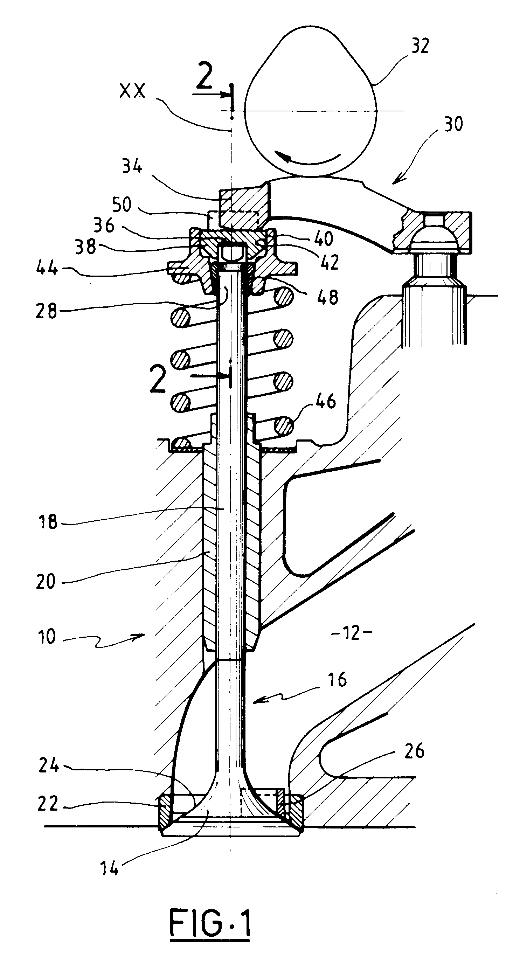

La portion de culasse 10 illustrée à la figure 1 comporte un conduit de gaz d'admission 12 dont la sortie est obturée par la tête 14 d'une soupape 16 dont la tige ou queue 18 est montée à travers la culasse 10 au moyen d'un guide de soupape 20.

La tête 14 prend appui contre un siège de soupape 22 et comporte, sur sa partie interne évasée 24, un déflecteur de gaz 26 qu'il est nécessaire de maintenir dans une orientation constante par rapport au conduit 12 et à la chambre de combustion (non représentée).

L'extrémité supérieure 28 de la queue 18 de la soupape 16 est commandée par l'intermédiaire d'un linguet de culbuteur 30 sur lequel agit une came de commande 32 de manière à provoquer son oscillation autour d'un axe perpendiculaire au plan de la feuille de la figure 1.

Une portion d'extrémité 34 du linguet oscillant 30 agit sur l'extrémité libre 36 de la tige 18 à travers une pièce intermédiaire 38.

La pièce intermédiaire 38 présente un contour externe cylindrique 40 de révolution autour de l'axe général X-X de la soupape 16.

Ce contour cylindrique 40 est reçu à rotation dans un logement de profil complémentaire 42 formé à l'intérieur d'une coupelle 44 contre la face inférieure de laquelle prend appui un ressort hélicoïdal 46 de rappel de la soupape en appui contre son siège 22.

Selon une technique connue, la coupelle d'appui 44 du ressort 46 est fixée à la portion d'extrémité 28 de la queue 18 de la soupape 16 par deux pièces 48.

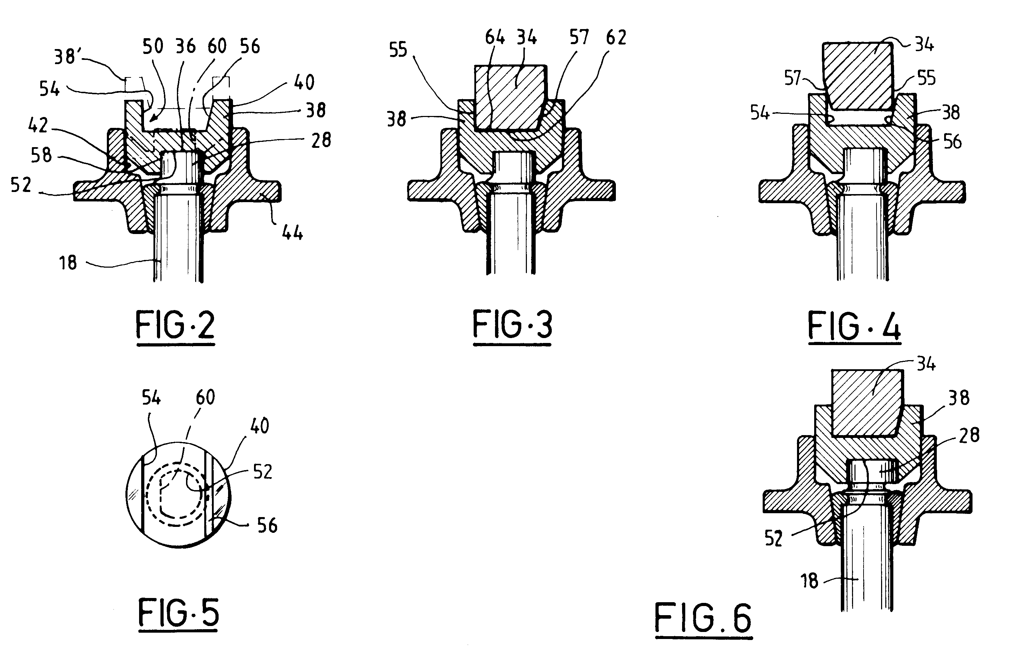

On décrira maintenant plus en détail la pièce intermédiaire 38 en se référant notamment aux figures 2 à 5.

La pièce intermédiaire 38 comporte un premier évidement axial 50 et un second évidement axial opposé 52.

Le premier évidement axial 50 est une rainure ouverte à la face supérieure qui s'étend selon une direction perpendiculaire à l'axe d'oscillation du linguet 30.

La rainure 50 est délimitée latéralement par deux faces latérales 54 et 56.

La première face latérale 54 est parallèle à l'axe de la soupape et perpendiculaire à l'axe d'oscillation du linguet 30, tandis que la seconde face latérale 56 est inclinée par rapport à la première surface 54 de manière à délimiter une rainure dont la section est évasée vers le haut en considérant la figure 2.

Les faces latérales 55 et 57 de la portion d'extrémité 34 sont reçues entre les faces latérales 54 et 56.

Le second évidement 52 est un évidement de forme générale cylindrique centrée sur l'axe X-X dans lequel est emmanchée l'extrémité libre 28 de la tige 18 de la soupape.

Afin d'assurer une orientation constante et définie de la pièce intermédiaire 38 par rapport à l'axe de la tige 18 de la soupape 16, la portion d'extrémité 28 de cette dernière comporte un méplat 58 qui s'étend parallèlement à l'axe de la soupape et qui coopère avec un méplat correspondant 60 formé dans le second évidement axial 52.

Grâce à cet agencement, il n'existe qu'un seul sens de montage de la pièce 38 autour de l'axe de la tige 18, tout autre montage étant impossible comme cela est illustré par la représentation en trait mixte 38' de la figure 2.

La portion d'extrémité 34 du linguet 30 comporte, au voisinage de sa face inférieure 62 qui prend appui dans le fond axial 64 du premier évidement 50, un profil qui, en section par un plan transversal parallèle à l'axe d'oscillation du linguet, a un contour complémentaire de celui de la rainure 50.

Le montage correct de la portion d'extrémité 34 dans la pièce 38 est illustré à la figure 3.

Etant donné le profil évasé et dissymétrique de la rainure 50, il est impossible d'introduire la portion d'extrémité 34 du linguet 30 dans le premier évidement 50 dans l'autre position diamétralement opposée comme cela est illustré à la figure 4.

Grâce à l'agencement de deux évidements dans la pièce 38 et à leurs formes complémentaires avec celle de la portion d'extrémité 28 de la tige 18 et de la portion d'extrémité 34 du linguet 30, la tête 14 de la soupape 16 est toujours maintenue avec la même orientation autour de son axe, et tout autre montage est rendu impossible.

Dans la variante illustrée à la figure 6, la portion d'extrémité 28 de la tige 18 de la soupape présente un profil extérieur cylindrique excentré par rapport à l'axe de la soupape et est reçue dans un logement également excentré 52 de la pièce intermédiaire 38.

L'agencement qui vient d'être décrit est particulièrement économique, les différents contours et méplats pouvant être obtenus directement par frittage.

La coupelle 44 d'appui du ressort 46 est libre de tourner autour de la pièce intermédiaire de guidage et d'orientation 38 et de la soupape 16, par exemple très légèrement lors des mouvements de compression variable du ressort hélicoïdal lorsque la soupape oscille axialement.

## Revendications

1. Dispositif de commande d'une soupape (16) du type comportant un élément oscillant (30) dont une portion d'extrémité (34) agit sur l'extrémité libre (28) de la queue (18) de la soupape (16) avec interposition d'une pièce intermédiaire (38) qui est liée en rotation à la queue de la soupape (18) et qui comporte au moins une surface (54) d'orientation qui coopère avec une surface de guidage correspondante (55) de la portion d'extrémité de l'élément oscillant (34) pour empêcher la rotation de la soupape (16) autour de son axe (X-X), caractérisé en ce que la pièce intermédiaire (38) comporte deux évidements opposés axialement dont le premier (50) reçoit la portion d'extrémité (34) de l'élément oscillant (30) et dont le second (52) reçoit l'extrémité libre (28) de la queue (18) de la soupape (16), et en ce que la queue de la soupape est équipée, au voisinage de son extrémité libre (28), d'une coupelle (44) d'appui pour un ressort hélicoïdal (46) de rappel de la soupape entourant la queue (18) de la soupape (16), la pièce intermédiaire (38) comportant un profil extérieur (40) de révolution autour de l'axe (X-X) de la soupape de manière à être montée à rotation dans un logement (42) complémentaire de la coupelle d'appui (44).

2. Dispositif de commande selon la revendication 1, caractérisé en ce que ladite surface d'orientation est constituée par au moins un méplat (54, 60) du premier évidement (50) qui s'étend parallèlement à l'axe de la soupape et qui coopère avec une surface plane de guidage (55) de la portion d'extrémité (34) de l'élément oscillant (30) qui est perpendiculaire à l'axe d'oscillation de cet élément.

3. Dispositif de commande selon la revendication 2, caractérisé en ce que la section par un plan parallèle à l'axe d'oscillation de la portion d'extrémité (34) de l'élément oscillant (30) et la section du premier évidement (50) présentent des contours complémentaires.

4. Dispositif de commande selon la revendication 3, caractérisé en ce que le premier évidement (50) est une rainure qui s'étend selon une direction perpendiculaire à l'axe d'oscillation de l'élément oscillant et en ce que la portion d'extrémité (34) comporte deux faces latérales (55, 57) qui sont reçues entre les faces latérales (54, 56) de la rainure (50).

5. Dispositif de commande selon la revendication 4, caractérisé en ce qu'il comporte des moyens (56, 57) de détrompage afin de n'autoriser le montage de la portion d'extrémité (34) de l'élément oscillant dans la rainure (50) que dans une seule des deux positions diamétralement opposées.

6. Dispositif de commande selon la revendication 5, caractérisé en ce que les deux faces (54, 56) de la rainure (50) ne sont pas parallèles entre elles, l'une d'elles étant inclinée par rapport à l'axe de la soupape pour former une rainure (50) évasée à sa face supérieure ouverte.

7. Dispositif de commande selon l'une quelconque des revendications précédentes, caractérisé en ce que l'extrémité libre (28) de la queue de la soupape comporte un méplat (58) parallèle à l'axe de la soupape et en ce que le second évidement (52) présente un contour (58) complémentaire de celui de l'extrémité libre (28) de la queue de la soupape.

8. Dispositif de commande selon l'une quelconque des revendications 1 à 6, caractérisé en ce que l'extrémité libre (28) de le queue de la soupape est excentrée par rapport à l'axe (X-X) de la queue (18) de le soupape.

9. Dispositif de commande selon l'une quelconque des revendications précédentes, caractérisé en ce que l'extrémité libre (28) de la queue de la soupape est emmanchée dans le second évidement (52).

## Claims

1. Device for controlling a valve (16) of the type having an oscillating element (30) of which one end portion (34) acts on the free end (28) of the stem (18) of the valve (16) with an intermediate piece (38) interposed which is rotationally connected to the stem of the valve (18) and which has at least one steering surface (54) which co-operates with a corresponding guiding surface (55) of the end portion of the oscillating element (34) in order to prevent the rotation of the valve (16) about its axis (X-X), characterised in that the intermediate piece (38) has two axially opposed recesses of which the first (50) receives the end portion (34) of the oscillating element (30) and of which the second (52) receives the free end (28) of the stem (18) of the valve (16), and in that the stem of the valve is equipped, in the vicinity of its free end (28), with a saddle (44) for supporting a helical restoring spring (46) of the valve surrounding the stem (18) of the valve (16), the intermediate piece (38) having an external profile (40) revolving about the axis (X-X) of the valve in such a way as to be rotatably mounted in a seat (42) which is complementary to the saddle (44).

2. Control device as claimed in Claim 1, characterised in that the said steering surface is formed by at least one flat part (54, 60) of the first recess (50) which extends parallel to the axis of the valve and which co-operates with a plane guiding surface (55) of the end portion (34) of the oscillating element (30) which is perpendicular to the axis of oscillation of this element.

3. Control device as claimed in Claim 2, characterised in that the section through a parallel plane to the axis of oscillation of the end portion (34) of the oscillating element (30) and the section of the first recess (50) have complementary contours.

4. Control device as claimed in Claim 3, characterised in that the first recess (50) is a slot which extends in a direction perpendicular to the axis of oscillation of the oscillating element and in that the end portion (34) has two lateral faces (55, 57) which are received between the lateral faces (54, 56) of the slot (50).

5. Control device as claimed in Claim 4, characterised in that it has locating means (56, 57) in order only to allow the mounting of the end portion (34) of the oscillating element in the slot (50) in only one of the two diametrically opposed position.

6. Control device as claimed in Claim 5, characterised in that the two faces (54, 56) of the slot (50) are not parallel to one another, one of them being inclined with respect to the axis of the valve in order to form a flared slot (50) on its upper open face.

7. Control device as claimed in any one of the preceding claims, characterised in that the free end (28) of the stem of the valve has a flat portion (58) parallel to the axis of the valve and in that the second recess (52) has a contour (58) complementary to that of the free end (28) of the stem of the valve.

8. Control device as claimed in any one of Claims 1 to 6, characterised in that the free end (28) of the stem of the valve is off-centred with respect to the axis (X-X) of the stem (18) of the valve,

9. Control device as claimed in any one of the preceding claims, characterised in that the free end (28) of the stem of the valve is fitted in the second recess (52).

## Patentansprüche

1. Steuervorrichtung für ein Ventil (16) des Typs mit einem Schwingelement (30), dessen einer Endbereich (34) über ein Zwischenstück (38) auf das freie Ende (28) des Schafts (18) des Ventils (16) einwirkt, wobei das Zwischenstück drehbar mit dem Ventilschaft (18) verbunden ist und Wenigstens eine Orientierungsfläche (54) aufweist, die mit einer entsprechenden Führungsfläche (55) des Endbereichs des Schwingelements (34) zusammenwirkt, um ein Drehen des Ventils 16 um seine Achse (X-X) zu verhindern, dadurch gekennzeichnet, daß das Zwischenstück (38) zwei axial gegenüberliegende Ausnehmungen aufweist, von denen die erste (50) den Endbereich (34) des Schwingelements (30) aufnimmt und von denen die zweite (52) das freie Ende (28) des Schafts (18) des Ventils (16) aufnimmt, und daß der Ventilschaft in der Nähe seines freien Endes (28) mit einem Federteller (44) für eine den Schaft (18) des Ventils (16) umgebende Schraubenfeder (46) zum Rückstellen des Ventils versehen ist, wobei das Zwischenstück ein Außenprofil (40) zum Drehen um die Achse (X-X) des Ventils aufweist, das drehbar in einer komplementären Aufnahme (42) Federtellers (44) angebracht ist.

2. Steuervorrichtung nach Anspruch 1, dadurch gekennzeichnet, daß die Oerientierungsfläche aus wenigstens einer nicht abgeschrägte Seitenfläche (54, 60) der ersten Ausnehmung (50) gebildet ist, welche sich parallel zur Achse des Ventils erstreckt und mit einer ebenen Führungsfläche (55) des Endbereichs (34) des Schwingelements (30) zusammenwirkt, das senkrecht zur Schwingachse dieses Elements verläuft.

3. Steuervorrichtung nach Anspruch 2, dadurch gekennzeichnet, daß der Schnitt entlang einer zur Schwingachse des Endbereichs (34) des Schwingelements (30) parallelen Ebene und ein Schnitt durch die erste Ausnehmung (50) komplementäre Konturen aufweisen.

4. Steuervorrichtung nach Anspruch 3, dadurch gekennzeichnet, daß die erste Ausnehmung (50) eine Nut ist, die sich senkrecht zur Schwingachse des Schwingelements erstreckt und daß der Endbereich (34) zwei Seitenflächen (55, 57) aufweist, die zwischen den Seitenflächen (54, 56) der Nut (50) aufgenommen sind.

5. Steuervorrichtung nach Anspruch 4, dadurch gekennzeichnet, daß sie Unverwechselbarkeitseinrichtunegn (56, 57) aufweist, um das Montieren des Endbereichs (34) des Schwingelements in der Nut (50) nur in einer von zwei diametral entgegengesetzten Positionen zuzulassen.

6. Steuervorrichtung nach Anspruch 5, dadurch gekennzeichnet, daß die beiden Flächen (54, 56) der Nut (50) nicht zueinander parallel sind, wobei die eine in bezug auf die Achse des Ventils geneigt ist, um eine an der offenen Oberseite aufgeweitete Nut (50) zu bilden.

7. Steuervorrichtung nach einem der vorhergehenden Ansprüche, dadurch gekennzeichnet, daß das freie Ende (28) des Ventilschafts eine nicht abgeschrägte Seitenfläche (58) aufweist, die parallel zur Achse des Ventils verläuft, und daß die zweite Ausnehmung (52) eine Kontur (58) aufweist, die zu derjenigen des freien Endes des Ventilschafts komplementär ist.

8. Steuervorrichtung nach einem der Ansprüche 1 bis 6, dadurch gekennzeichnet, daß das freie Ende (28) des Ventilschafts in bezug auf die Achse (X-X) des Schafts (18) des Ventils exzentrisch ist.

9. Steuervorrichtung nach einem der vorhergehenden Ansprüche, dadurch gekennzeichnet, daß das freie Ende (28) des Ventilschafts in die zweite Ausnehmung (52) eingepreßt ist.
